# EUROPÄISCHE PATENTANMELDUNG

(11) **EP 0 872 392 A1**
(43) Veröffentlichungstag der Anmeldung: **21.10.1998**
(21) Anmeldenummer: 98106829.9
(22) Anmeldetag: 15.04.1998
(51) Int. Cl.: B60S 3/06, B60S 3/00

(54) **Verfahren zum Reinigen eines Fahrzeugs**

(30) Priorität: 18.04.1997 DE 19716360
(71) Anmelder: Alfred Kärcher GmbH & Co., 71364 Winnenden (DE)
(72) Erfinder: Asch, Markus, D-72119 Ammerbuch (DE)
(74) Vertreter: Hoeger, Stellrecht & Partner

(57) **Zusammenfassung**

Um ein Verfahren zum Reinigen eines Fahrzeuges, insbesondere eines Schienenfahrzeuges (13), mit einer Fahrzeugwaschanlage (10) mit zwei Wascheinheiten (15,17), bei dem man das Fahrzeug (13) während der Einfahrt in einen Waschbereich (19) der Fahrzeugwaschanlage (10) mittels einer ersten Wascheinheit (15) mit einem Reinigungsmittel einreibt und anschließend unter Zuhilfenahme der zweiten Wascheinheit (17) mechanisch wäscht, derart weiterzubilden, daß das Fahrzeug mit möglichst geringem Zeitaufwand und gutem Reinigungsergebnis gereinigt werden kann, ohne daß die Gefahr besteht, daß das Fahrzeug (13) und/oder die Wascheinheiten (15,17) während der Reinigung beschädigt werden, wird vorgeschlagen, daß man das mit Reinigungsmittel eingeriebene Fahrzeug (13) im Waschbereich (19) positioniert und anschließend beide Wascheinheiten (15,17) entlang des stehenden Fahrzeuges (13) bewegt und das Fahrzeug mit beiden Wascheinheiten (15,17) wäscht. Außerdem wird eine Anlage (10) zum Reinigen von Fahrzeugen (13), insbesondere von Schienenfahrzeugen, vorgeschlagen zur Durchführung des Verfahrens.

## Beschreibung

Die vorliegende Erfindung betrifft ein Verfahren zum Reinigen eines Fahrzeugs, insbesondere eines Schienenfahrzeuges, mit einer Fahrzeugwaschanlage mit zwei Wascheinheiten, wobei man das Fahrzeug während der Einfahrt in einen Waschbereich der Fahrzeugwaschanlage mittels einer ersten Wascheinheit mit einem Reinigungsmittel einreibt und anschließend unter Zuhilfenahme der zweiten Wascheinheit mechanisch wäscht.

Die Erfindung betrifft außerdem eine Anlage zum Reinigen von Fahrzeugen, insbesondere Schienenfahrzeugen, zur Durchführung des Reinigungsverfahrens.

Derartige Reinigungsverfahren kommen insbesondere zur Reinigung von Zügen und Straßenbahnen zum Einsatz. Bei solchen Fahrzeugen sind während der Reinigung möglichst auch Schwermetallreste zu entfernen, die sich auf der Oberfläche des Fahrzeuges ablagern und die vom Eisenabrieb der Schienen und - bei elektromotorisch angetriebenen Fahrzeugen - vom Kupferabrieb der Fahrdrähte herrühren. Zur Entfernung derartiger Schwermetallreste hat es sich als günstig erwiesen, ein saures Reinigungsmittel auf die zu reinigende Oberfläche des Fahrzeuges aufzubringen und nach einer Einwirkzeit das Fahrzeug mittels einer Reinigungsbürste mechanisch zu waschen.

Aus dem Prospekt "Kleindienst NUFA Typ 6-171 vollautomatische fahrbare Nutzfahrzeug-Waschmaschine für Omnibusse" ist ein Reinigungsverfahren bekannt, bei dem das zu reinigende Fahrzeug zunächst durch einen Benetzungsbogen hindurchgefahren wird, wobei während der Durchfahrt ein Reinigungsmittel auf das Fahrzeug aufgetragen wird. Nach der Einfahrt in einen Waschbereich der Fahrzeugwaschanlage wird das stehende Fahrzeug mittels zweier verfahrbarer Bürstenaggregate gewaschen. Zur Entfernung von Schwermetallresten ist es bei diesem Verfahren erforderlich, eine verhältnismäßig lange Einwirkzeit des aufgebrachten Reinigungsmittels sicherzustellen, um ein befriedigendes Reinigungsergebnis zu erzielen.

Ein weiteres Reinigungsverfahren ist aus der europäischen Patentschrift EP 0 309 004 B1 bekannt. Bei diesem Verfahren wird das stehende Fahrzeug mittels einer ersten Wascheinheit, die entlang des Fahrzeuges verfahrbar ist, mit einem Reinigungsmittel eingerieben. In zeitlichem Abstand folgt der ersten Wascheinheit eine zweite Wascheinheit, mit deren Hilfe das Fahrzeug anschließend gewaschen wird. Ein derartiges Verfahren hat den Vorteil, daß aufgrund des Einreibens des Reinigungsmittels eine geringere Einwirkzeit ausreicht, um auch Schwermetallreste vom Fahrzeug entfernen zu können. Sollen allerdings längere Fahrzeuge, insbesondere Schienenfahrzeuge, mit diesem Verfahren gereinigt werden, so ist hierzu eine beträchtliche Gesamtreinigungszeit erforderlich.

Um insbesondere Schienenfahrzeuge in verhältnismäßig kurzer Zeit reinigen zu können, sind auch Verfahren bekannt, bei denen zwei stationäre Wascheinheiten zum Einsatz kommen und das Fahrzeug im Durchfahrtbetrieb gereinigt wird. Während der Durchfahrt durch die erste Wascheinheit wird hierbei ein Reinigungsmittel auf das Fahrzeug aufgetragen und eingerieben. Anschließend wird das Fahrzeug mit Hilfe der nachfolgenden zweiten Wascheinheit gewaschen. Hierbei können verhältnismäßig kurze Gesamtreinigungszeiten erzielt werden, allerdings besteht die Gefahr, daß die Wascheinheiten beim Einreiben bzw. Waschen von Rücksprüngen, Kanten und Vorsprüngen des durchfahrenden Fahrzeuges beschädigt werden. Zur Beseitigung dieser Gefahr wurde bereits vorgeschlagen, die üblicherweise quer zur Längsrichtung des Fahrzeuges verschwenkbar angeordneten Wascheinheiten zu arretieren, um auf diese Weise sicherzustellen, daß sie sich nicht in Rücksprüngen verfangen und vom fahrenden Fahrzeug beschädigt werden. Eine Arretierung hat allerdings im Bereich von Rücksprüngen ein schlechteres Reinigungsergebnis zur Folge.

Aufgabe der vorliegenden Erfindung ist es, ein gattungsgemäßes Verfahren sowie eine Anlage zum Reinigen von Fahrzeugen zur Durchführung des Verfahrens derart weiterzubilden, daß ein Fahrzeug mit möglichst geringem Zeitaufwand und gutem Reinigungsergebnis gereinigt werden kann, ohne daß die Gefahr besteht, daß das Fahrzeug und/oder die zum Einsatz kommenden Wascheinheiten während der Reinigung beschädigt werden.

Diese Aufgabe wird bei einem Verfahren der eingangs genannten Art erfindungsgemäß dadurch gelöst, daß man das mit Reinigungsmittel eingeriebene Fahrzeug im Waschbereich positioniert und anschließend beide Wascheinheiten entlang des stehenden Fahrzeuges bewegt und das Fahrzeug mit beiden Wascheinheiten wäscht.

Die erste Wascheinheit kommt somit sowohl zum Auftragen und Einreiben des Reinigungsmittels zum Einsatz als auch - in Ergänzung zur zweiten Wascheinheit - zum Waschen des Fahrzeuges. Das Einreiben des Fahrzeuges mit Reinigungsmittel erfolgt beim Einfahren in den Waschbereich der Fahrzeugwaschanlage, während der Waschvorgang mittels beider Wascheinheiten bei stehendem Fahrzeug erfolgt. Hierdurch wird insgesamt eine kurze Gesamtreinigungszeit erzielt, da das Einreiben des Fahrzeuges mit Reinigungsmittel bereits während der Einfahrt vorgenommen wird und da zum Waschen des Fahrzeuges beide Wascheinheiten eingesetzt werden. Es hat sich herausgestellt, daß die Gefahr einer Beschädigung des Fahrzeuges und/oder einer Wascheinheit während des Waschvorganges am größten ist. Dieser Vorgang, der zur Erzielung eines guten Reinigungsergebnisses bei an der zu reinigenden Oberfläche des Fahrzeuges anliegenden Wascheinheiten erfolgen soll, wird deshalb bei stehen-dem Fahrzeug vorgenommen. Es hat sich gezeigt, daß zum Einreiben des Reinigungsmittels kein derart enger Kontakt zwischen der Wascheinheit und dem Fahrzeug erforderlich ist, wie dies während des Waschvorganges wünschenswert ist. Das Fahrzeug wird deshalb während der Einfahrt in den Waschbereich der Fahrzeugwaschanlage eingerieben, ohne daß hiermit die Gefahr einer Beschädigung des Fahrzeuges und/oder der Wascheinheit besteht. Somit kann insgesamt bei geringem Zeitaufwand ein gutes Reinigungsergebnis erzielt werden.

Von Vorteil ist es, während der Einfahrt des Fahrzeuges in den Waschbereich die erste Wascheinheit am Anfang und die zweite Wascheinheit am Ende des Waschbereiches zu positionieren und während des Waschvorganges die beiden Wascheinheiten aufeinander zuzubewegen. Dies ermöglicht es, die beiden Wascheinheiten derart anzusteuern, daß die erste Wascheinheit während der Einfahrt des Fahrzeuges das Reinigungsmittel auf das Fahrzeug aufträgt und einreibt, wobei der Einreibvorgang solange erfolgt, bis der Frontbereich des Fahrzeuges die Höhe der zweiten Wascheinheit erreicht. Anschließend werden beide Wascheinheiten derart aktiviert, daß sie sich aufeinander zubewegen, so daß innerhalb kurzer Zeit der Waschvorgang durchgeführt werden kann.

Bei einer besonders bevorzugten Ausgestaltung des erfindungsgemäßen Verfahrens ist vorgesehen, daß man nach der Einfahrt des Fahrzeuges in den Waschbereich die erste Wascheinheit bei stehendem Fahrzeug zunächst entlang eines ersten Teilbereichs des Fahrzeuges in einer Leerfahrt, ohne das Fahrzeug einzureiben oder zu waschen, in Richtung auf die zweite Wascheinheit bewegt, dann ihre Bewegungsrichtung umkehrt und in einer Waschfahrt den ersten Teilbereich wäscht, und daß man während der Hin- und Herfahrt der ersten Wascheinheit mittels der zweiten Wascheinheit den restlichen Bereich des Fahrzeuges wäscht. Eine derartige Ausgestaltung ermöglicht eine besonders zuverlässige Reinigung des Fahrzeuges, indem die beiden Wascheinheiten beim Waschen relativ zum Fahrzeug dieselbe Bewegungsrichtung aufweisen, wie sie auch beim Auftragen und Einreiben des Reinigungsmittels vorliegt. Sowohl das Einreiben als auch das Waschen erfolgt jeweils in der vom Front-bereich auf den Heckbereich des Fahrzeuges weisenden Richtung. Derjenige Bereich, der zuerst mit dem Reinigungsmittel eingerieben wurde, wird anschließend auch zuerst gewaschen. Das erfindungsgemäße Verfahren zeichnet sich somit durch eine gleichmäßigere Einwirkungszeit des aufgetragenen Reinigungsmittels aus.

Um das Fahrzeug mit einem besonders geringen Zeitaufwand zu reinigen, ist bei einer bevorzugten Ausgestaltung des Verfahrens vorgesehen, daß die erste Wascheinheit während ihrer Leerfahrt mit höherer Geschwindigkeit bewegt wird als während der anschließenden Waschfahrt. So kann beispielsweise vorgesehen sein, daß die erste Wascheinheit während ihrer Leerfahrt mit etwa doppelt so großer Geschwindigkeit bewegt wird wie während ihrer Waschfahrt. Günstig ist es hierbei, wenn die Geschwindigkeiten der beiden Wascheinheiten während der Waschfahrt im wesentlichen übereinstimmen. Dies gewährleistet eine gleichmäßige Einwirkungszeit des zuvor aufgetragenen und eingeriebenen Reinigungsmittels längs des gesamten Fahrzeuges. Dies wiederum hat zur Folge, daß über die gesamte Fahrzeuglänge ein sehr gutes Reinigungsergebnis erzielt wird.

Das Reinigungsergebnis kann zusätzlich gesteigert werden, indem dem ersten Waschvorgang ein zweiter Waschvorgang folgt, wobei die beiden Wascheinheiten relativ zum ersten Waschvorgang in umgekehrter Bewegungsabfolge entlang des zu reinigenden Fahrzeuges bewegt werden und den von ihrer Bewegung jeweils erfaßten Teilbereich ein zweites Mal waschen. So kann vorgesehen sein, daß die erste Wascheinheit nach Beendigung des ersten Waschvorganges in Richtung auf das Ende des Waschbereiches entlang des ersten Teilbereichs des Fahrzeuges bewegt wird und diesen Teilbereich ein zweites Mal wäscht, anschließend ihre Bewegungsrichtung umkehrt und in einer Leerfahrt zurück auf den Anfang des Waschbereichs bewegt wird, und daß während dieser Hin- und Herfahrt der ersten Wascheinheit die zweite Wascheinheit zurück auf das Ende des Waschbereichs bewegt wird und hierbei den restlichen Bereich des Fahrzeuges wäscht. Eine derartige Ausgestaltung hat insbesondere den Vorteil, daß die Bewegung der Wascheinheiten zurück auf ihre ursprüngliche Position gleichzeitig zum nochmaligen Waschen des Fahrzeuges benutzt wird.

In vielen Fällen ist der Verschmutzungsgrad des Fahrzeuges im Front- und Heckbereich besonders groß. Außerdem weisen beispielsweise Schienenfahrzeuge in diesen Bereichen meist eine sich verjüngende Kontur auf. Bei einer besonders bevorzugten Ausgestaltung des erfindungsgemäßen Verfahrens ist deshalb vorgesehen, daß man zum Einreiben des Frontbereiches des Fahrzeuges mit einem Reinigungsmittel beim Einfahren zunächst den Front-bereich des Fahrzeuges in Höhe der ersten Wascheinheit positioniert, dann bei stehendem Fahrzeug die erste Wascheinheit entlang des Frontbereichs bewegt und diesen mit einem Reinigungsmittel einreibt, daraufhin das Fahrzeug weiter in den Waschbereich einfährt und gleichzeitig mittels der ersten Wascheinheit mit einem Reinigungsmittel einreibt und dann bei stehendem Fahrzeug die erste Wascheinheit entlang des Heckbereiches bewegt und diesen mit Reinigungsmittel einreibt. Diese Ausgestaltung hat den Vorteil, daß die in der Regel besonders verschmutzten und eine komplizierte Kontur aufweisenden Bereiche des Fahrzeuges bei stehendem Fahrzeug und sich bewegender Wascheinheit eingerieben werden. Kommen zum Einreiben des Reinigungsmittels bei der ersten Wascheinheit drehbar gelagerte Seitenbürsten mit im wesentlichen vertikal ausgerichteter Drehachse zum Einsatz, so kann vorgesehen sein, daß diese quer zur Einfahrtrichtung des Fahrzeuges diesem zustellbar gehalten sind. So kann beispielsweise eine verschwenkbare Lagerung der Seitenbürsten zum Einsatz kommen oder auch eine teleskopartige Führung der Seitenbürsten quer zur Einfahrtrichtung des Fahrzeugs. Die Zustellung der Seitenbürsten kann mit Hilfe einer Bürstenregelung erfolgen, die die Seitenbürsten entlang der zu reinigenden Oberfläche des Fahrzeugs führt. Während des Einreibens des Front- und Heckbereiches des Fahrzeuges können die Seitenbürsten somit auch einer sich verjüngenden Kontur des Fahrzeuges folgen. Während des Einfahrens des Fahrzeuges werden die Seitenbürsten vorzugsweise arretiert, so daß die Gefahr vermindert wird, daß sich die Seitenbürsten in Rücksprüngen des Fahrzeuges verfangen und von diesem mitgerissen werden.

Zur Reinigung des Fahrzeuges kann vorgesehen sein, daß man die beiden Wascheinheiten zu Beginn des Reinigungsvorganges in einem derartigen Abstand zueinander anordnet, daß das gesamte Fahrzeug zwischen den beiden Wascheinheiten positioniert werden kann. Bei einer derartigen Ausgestaltung werden die beiden Wascheinheiten insgesamt über die gesamte Länge des zu reinigenden Fahrzeuges, beispielsweise entlang eines Zuges, bewegt.

Um eine besonders geringe Gesamtreinigungszeit zu erzielen, ist bei einer bevorzugten Ausgestaltung vorgesehen, daß man mehrere Wascheinheiten-Paare mit jeweils einer ersten und einer zweiten Wascheinheit in gleichmäßigem Abstand hintereinanderreiht, wobei die einzelnen Wascheinheiten-Paare jeweils einen zu reinigenden Abschnitt des Fahrzeuges zwischen sich aufnehmen, und daß man die zu reinigenden Abschnitte des Fahrzeuges gleichzeitig mittels jeweils eines Wascheinheiten-Paares reinigt, wobei man beim Einfahren des Fahrzeuges in den Waschbereich dann mit dem Einreiben des Reinigungsmittels mittels der jeweils ersten Wascheinheiten beginnt, wenn die Front des Fahrzeuges die in Einfahrtrichtung vorderste erste Wascheinheit passiert. Das zu reinigende Fahrzeug wird somit in mehrere gleich lange Abschnitte unterteilt, die jeweils von einem Wascheinheiten-Paar wie voranstehend beschrieben gereinigt werden. Hierbei wird der jeweils zu reinigende Abschnitt von der jeweiligen ersten Wascheinheit mit dem Reinigungsmittel eingerieben. Der Einreibvorgang beginnt zu dem Zeitpunkt, zu dem die Front des Fahrzeuges diejenige erste Wascheinheit erreicht, die in Einfahrtrichtung an vorderster Stelle angeordnet ist. Auf diese Weise wird eine gleich lange Einwirkzeit für das Reinigungsmittel entlang sämtlicher zu reinigender Abschnitte gewährleistet.

Sofern sehr lange Fahrzeuge, beispielsweise Straßenbahnen oder Züge, zu reinigen sind, hat es sich als vorteilhaft erwiesen, wenn man das Fahrzeug abschnittsweise reinigt, indem man jeweils einen zu reinigenden Abschnitt des Fahrzeuges zwischen zwei im Abstand zueinander angeordnete Wascheinheiten positioniert, diesen Abschnitt wie voranstehend beschrieben mittels der Wascheinheiten reinigt und das Fahrzeug anschließend soweit in Einfahrtrichtung weiterbewegt, bis der Anfang des gereinigten Abschnittes die Höhe der zweiten Wascheinheit erreicht, wobei während dieser Weiterfahrt der nachfolgend zu reinigende Abschnitt mittels der ersten Wascheinheit mit Reinigungsmittel eingerieben wird. Dies ermöglicht einen Taktbetrieb, in dem jeweils ein Abschnitt des Fahrzeuges gereinigt und während der Positionierung des nachfolgend zu reinigenden Abschnittes zwischen den beiden Wascheinheiten mittels der ersten Wascheinheit bereits das Reinigungsmittel auf den nachfolgend zu reinigenden Abschnitt aufgetragen und eingerieben wird. Die abschnittsweise Reinigung insbesondere von Schienenfahrzeugen hat den Vorteil, daß die beiden Wascheinheiten in einem verhältnismäßig geringen Abstand zueinander positioniert werden können, so daß insgesamt nur ein geringer Platzbedarf für die Reinigung des Fahrzeuges besteht.

Die der Erfindung zugrundeliegende Aufgabe wird bei einer Anlage zum Reinigen von Fahrzeugen, insbesondere von Schienenfahrzeugen, mit zwei Wascheinheiten, wobei eine erste Wascheinheit Mittel zum Auftragen und Einreiben eines Reinigungsmittels auf das Fahrzeug und die zweite Wascheinheit Mittel zum mechanischen Waschen des Fahrzeuges umfaßt, dadurch gelöst, daß die erste Wascheinheit Mittel zum mechanischen Waschen des Fahrzeuges umfaßt und daß die beiden Wascheinheiten mit unterschiedlicher Geschwindigkeit und unterschiedlicher Bewegungsrichtung parallel zur Längsachse des zu reinigenden Fahrzeuges verfahrbar sind. Wie voranstehend erläutert, hat die Ausgestaltung sowohl der ersten als auch der zweiten Wascheinheit mit Mitteln zum mechanischen Waschen des Fahrzeuges den Vorteil, daß beide Wascheinheiten für den Waschvorgang eingesetzt werden können. Da die beiden Wascheinheiten erfindungsgemäß mit unterschiedlicher Geschwindigkeit und unterschiedlicher Bewegungsrichtung verfahrbar sind, können die beiden Wascheinheiten in entgegengesetzte Richtungen zueinander bewegt werden und jeweils einen Teilbereich des Fahrzeuges oder eines zu reinigenden Abschnittes des Fahrzeuges waschen.

Von Vorteil ist es, wenn die erste Wascheinheit unabhängig von der zweiten Wascheinheit verfahrbar ist. Dies ermöglicht es, mit Hilfe der ersten Wascheinheit den Front- und/oder Heckbereich des Fahrzeuges bei stehendem Fahrzeug mit dem Reinigungsmittel einzureiben, ohne daß hierbei die zweite Wascheinheit bewegt wird.

Besonders günstig ist es, wenn die erste Wascheinheit bei einer Leerfahrt, ohne Reinigungsmittel einzureiben oder das Fahrzeug zu waschen, mit höherer Geschwindigkeit verfahrbar ist als während einer Waschfahrt, bei der sie das Fahrzeug wäscht. Bevorzugt ist die erste Wascheinheit während einer Leerfahrt mit höherer Geschwindigkeit als die zweite Wascheinheit verfahrbar. Dies ermöglicht es der ersten Wascheinheit, nach dem Einreiben des Fahrzeuges oder eines zu reinigenden Ab-schnittes des Fahrzeuges mit Reinigungsmittel in einer Leerfahrt eine Position zwischen dem Anfang und dem Ende des Waschbereiches einzunehmen, dann ihre Bewegungsrichtung umzukehren und den während der Leerfahrt überdeckten Teilbereich des Fahrzeuges zu waschen, so daß die Bewegungsrichtung der beiden Wascheinheiten beim Waschen des Fahrzeuges übereinstimmt. Vorteilhafterweise sind die beiden Wascheinheiten während ihrer Waschfahrt mit im wesentlichen gleicher Geschwindigkeit verfahrbar.

Bei einer besonders bevorzugten Ausgestaltung der erfindungsgemäßen Anlage ist vorgesehen, daß die erste Wascheinheit bei einer Leerfahrt mit etwa doppelt so großer Geschwindigkeit verfahrbar ist wie bei ihrer Waschfahrt, und insbesondere mit ungefähr doppelt so großer Geschwindigkeit wie die zweite Wascheinheit. Dies ermöglicht es, zu Beginn des Reinigungsvorganges die erste Wascheinheit am Anfang und die zweite Wascheinheit am Ende des Waschbereiches zu positionieren und das Fahrzeug (oder, bei einer abschnittsweisen Reinigung, einen zu reinigenden Abschnitt des Fahrzeuges) in den Waschbereich einzufahren, wobei das Fahrzeug gleichzeitig mit Reinigungsmittel eingerieben wird. Erreicht die Front des Fahrzeuges die Höhe der zweiten Wascheinheit, so beginnt diese bei stehendem Fahrzeug eine Waschfahrt mit einfacher Fahrgeschwindigkeit in Richtung Fahrzeugmitte. Gleichzeitig beginnt die erste Wascheinheit eine Leerfahrt mit doppelter Fahrgeschwindigkeit ebenfalls in Richtung Fahrzeugmitte. Sobald die erste Wascheinheit 40% der Länge des Waschbereiches zurückgelegt hat, kommt sie zum Stillstand und beginnt dann eine Waschfahrt ebenfalls mit einfacher Fahrgeschwindigkeit in entgegengesetzter Richtung. Wenn die erste Wascheinheit den Anfangspunkt wieder erreicht hat, hat die zweite Wascheinheit 60% der Länge zurückgelegt, so daß das gesamte Fahrzeug (oder der gesamte zu reinigende Abschnitt des Fahrzeuges) einmal gewaschen ist. Beide Wascheinheiten können nun ihre Bewegungsrichtung umkehren und mit einfacher Fahrgeschwindigkeit einen zweiten Waschvorgang fahren. Sobald die erste Wascheinheit 40% der Länge des Waschbereiches zurückgelegt hat, wechselt sie wiederum die Fahrtrichtung und fährt in einer Leerfahrt mit doppelter Fahrgeschwindigkeit zurück zu ihrem Ausgangspunkt. Hat die erste Wascheinheit ihren Ausgangspunkt erreicht, so ist auch die zweite Wascheinheit wieder an ihrem Ausgangspunkt angelangt und das Fahrzeug (oder der zu reinigende Abschnitt des Fahrzeuges) wurde auf der gesamten Länge zweimal gewaschen.

Die nachfolgende Beschreibung einer bevorzugten Ausführungsform des erfindungsgemäßen Verfahrens sowie der erfindungsgemäßen Anlage zur Durchführung des Verfahrens dient im Zusammenhang mit der Zeichnung der näheren Erläuterung. Es zeigen:
- Figuren 1 bis 6:: in schematischer Darstellung einzelne Verfahrensschritte zur Reinigung eines Schienenfahrzeuges und
- Figur 7:: eine schematische Darstellung einer Zugwaschanlage zur Durchführung des Verfahrens.

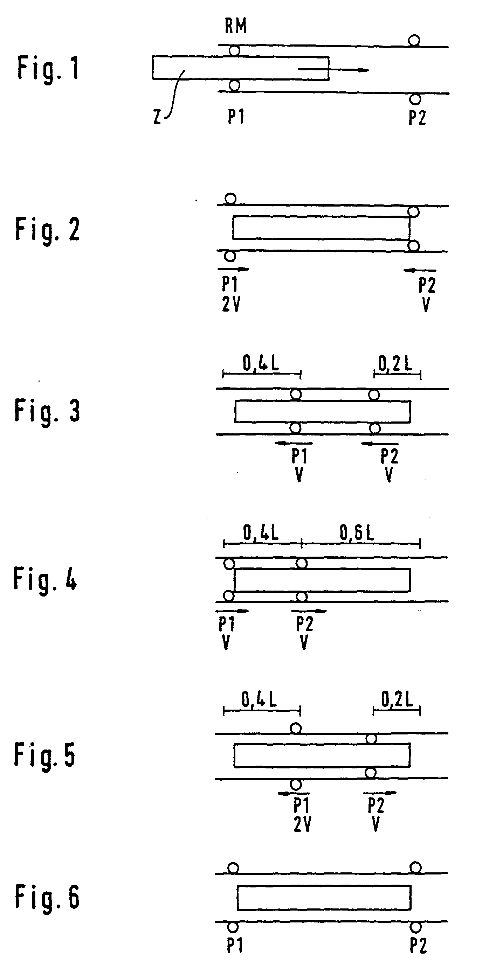

In den Figuren 1 bis 6 ist in schematischer Weise eine Zugwaschanlage dargestellt mit zwei Waschwagen P1 und P2, die auf Führungsbahnen parallel zur Längsachse eines Zuges Z verfahrbar sind. Die beiden Waschwagen P1 und P2 umfassen jeweils zwei drehbar gehaltene Seitenbürsten mit vertikalen Drehachsen. Die Seitenbürsten sind quer zur Längsrichtung des Zuges Z zwischen einer im Abstand zu den Seitenflächen des Zuges gehaltenen Position und einer an den Seitenflächen des Zuges Z anliegenden Position verstellbar, vorzugsweise verschwenkbar. Der Waschwagen P1 umfaßt zusätzlich Spritzdüsen, um auf die Seitenflächen des Zuges Z ein Reinigungsmittel aufzusprühen. Alternativ und/oder ergänzend kann vorgesehen sein, daß das Reinigungsmittel zunächst auf die Seitenbürsten und mittels diesen dann auf die Seitenfläche aufgetragen wird. Dieses Reinigungsmittel kann dann mit Hilfe der beiden Seitenbürsten des Waschwagens P1 auf die Seitenflächen des Zuges Z eingerieben werden.

Die beiden Waschwagen P1 und P2 sind zu Beginn des Reinigungsvorganges am Anfang bzw. am Ende eines Waschbereiches positioniert, der sich zwischen den beiden Waschwagen erstreckt. Zum Reinigen des Zuges wird die-ser, wie in Figur 1 dargestellt, in den Wachbereich eingefahren. Gleichzeitig wird mittels des Waschwagens P1 ein Reinigungsmittel auf die Seitenflächen des Zuges aufgetragen und mit Hilfe der beiden Seitenbürsten ein-gerieben. Erreicht die Front des Zuges, wie in Figur 2 dargestellt, den Endpunkt des Waschbereiches und somit den Waschwagen P2, so beginnt bei stehendem Zug der Waschwagen P2 eine Waschfahrt mit einfacher Fahrgeschwindigkeit V in Richtung auf die Mitte des Zuges. Gleichzeitig beginnt der Waschwagen P1 eine Leerfahrt mit doppelter Fahrgeschwindigkeit 2V in Richtung Fahrzeugmitte. Während der Leerfahrt sind die beiden Seitenbürsten des Waschwagens P1 nach außen verschwenkt und liegen somit nicht an den Seitenflächen des Zuges Z an, wie dies bei den Seitenbürsten des Waschwagens P2 bei dessen Waschfahrt der Fall ist. Sobald der Waschwagen P1 40% der Gesamtlänge L des Waschbereiches zurückgelegt hat, kommt er zum Stillstand und beginnt eine Waschfahrt mit einfacher Fahrgeschwindigkeit V in entgegengesetzter Richtung. Dies ist in Figur 3 dargestellt. Zu diesem Zeitpunkt hat der Waschwagen P2, der mit einfacher Fahrgeschwindigkeit bewegt wird, 20 % der Gesamtlänge des Waschbereiches überdeckt.

Wenn der Waschwagen P1 wieder seinen Anfangspunkt erreicht hat, wie dies in Figur 4 dargestellt ist, hat der Waschwagen P2 60% der Gesamtlänge L zurückgelegt, so daß das gesamte Fahrzeug einmal gewaschen ist. Beide Waschwagen wechseln nun ihre Bewegungsrichtung und fahren mit einfacher Fahrgeschwindigkeit V einen zweiten Waschgang, wie dies aus Figur 4 ersichtlich ist. Sobald der Waschwagen P1 40% der Gesamtlänge L zurückgelegt hat, wechselt er wiederum seine Fahrtrichtung und fährt in einer Leerfahrt mit im Abstand zu den Seitenflächen des Zuges Z gehaltenen Seitenbürsten mit doppelter Fahrgeschwindigkeit 2V zurück zu seinem Ausgangspunkt. Dies ist in Figur 5 dargestellt.

Wenn der Waschwagen P1 seinen Ausgangspunkt wieder erreicht hat, ist auch der Waschwagen P2 an seinem Ausgangspunkt am Ende des Waschbereiches angelangt und der Zug ist auf seiner gesamten Länge zweimal gewaschen worden.

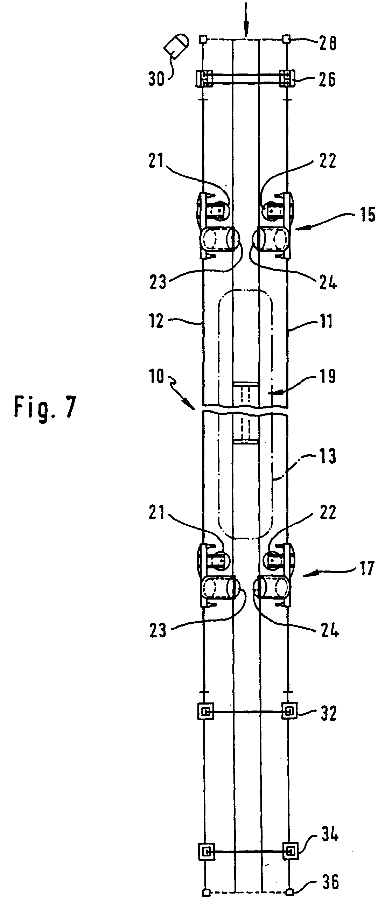

Eine bevorzugte Ausführungsform einer Zugwaschanlage zur Durchführung des Verfahrens ist in Figur 7 schematisch dargestellt und mit dem Bezugszeichen 10 belegt. Die Zugwaschanlage 10 umfaßt zwei auf Längsführungsbahnen 11 und 12 parallel zur Längsrichtung eines zu reinigenden Zuges 13 verfahrbare Wascheinheiten 15 und 17` die im Abstand zueinander am Anfang bzw. am Ende eines Waschbereiches 19 angeordnet sind.

Die Wascheinheiten 15 und 17 umfassen jeweils zwei quer zur Längsrichtung des Zuges 13 diesem zustellbar gehaltene, beispielsweise verschwenkbare Seitenbürsten 21, 22, die mittels eines in der Zeichnung nicht dargestellten elektromotorischen Antriebes um eine vertikal ausgerichtete Drehachse verdrehbar sind. Zur Reinigung des Dachbereiches des Zuges 13 umfassen die beiden Wascheinheiten 15 und 17 zusätzlich jeweils zwei Dachschrägenbürsten 23 und 24 mit schräg zu Vertikalen ausgerichteten Drehachsen, wobei die Dachschrägenbürsten 23 und 24 horizontal ausrichtbar und in ihrer Höhe verstellbar sind, so daß sie beispielsweise auch zur Reinigung eines sich in Fahrtrichtung verjüngenden Frontbereiches eingesetzt werden können.

Dem Waschbereich 19 vorgelagert ist ein Spülbogen 26, an dem in der Zeichnung nicht dargestellte Hochdruckdüsen angeordnet sind, und eine Lichtschranke 28 sowie eine Signaleinheit 30, die außerhalb einer die Zugwaschanlage 10 umgebenden Waschhalle positioniert ist. Die Waschhalle ist in der Zeichnung nicht dargestellt.

Dem Waschbereich 19 nachgeordnet sind ein Nachspülbogen 32, eine Trocknungseinheit 34 sowie eine weitere Lichtschranke 36.

Erhält ein zu reinigender Zug von der Signaleinheit 30 ein Signal zur Einfahrt, so fährt der Zug in die Waschhalle ein und passiert hierbei zunächst die Lichtschranke 28, die den Spülbogen 26 aktiviert, der vom Zug 13 durchfahren wird. Der Spülbogen 26 dient hierbei einer Vorwäsche, bei der die Oberfläche des Zuges mit Insektenlösemittel eingesprüht und der Zug im Falle eines Winterbetriebes gleichzeitig vorgewärmt wird, indem der Zug mit warmem Wasser besprüht wird. Anschließend durchfährt der Zug 13 die Wascheinheit 15 und erreicht schließlich mit seinem Frontbereich die nachgeordnete Wascheinheit 17. Während der Durchfahrt durch die Wascheinheit 15 wird von dieser mittels in der Zeichnung nicht dargestellter Düsen ein saures Reinigungsmittel auf die Oberfläche des Zuges aufgetragen und mit Hilfe der Seitenbürsten 21 und 22 und der Dachschrägenbürsten 23 und 24 eingerieben. Die Zeitspanne, die der Zug zur Überwindung des Abstandes zwischen der Wascheinheit 15 und der Wascheinheit 17 benötigt, dient als Einwirkzeit für das eingeriebene Reinigungsmittel. Sobald der Zug 13 mit seiner Front die Wascheinheit 17 erreicht, wird der Zug 13 abgestoppt und es beginnt das voranstehend unter Bezugnahme auf die Figuren 1 bis 6 erläuterte Reinigungsverfahren, wobei die Wascheinheiten 15 und 17 jeweils entlang eines Teilbereiches des Zuges 13 verfahren werden.

Nach Ende des zweiten Waschvorganges haben die Wascheinheiten 15 und 17, wie voranstehend erläutert, ihre ursprünglichen Positionen wieder eingenommen. Daraufhin setzt sich der Zug 13 wieder in Bewegung, durchfährt den Nachspülbogen 32 und die Trocknungseinheit 34 und verläßt schließlich die Waschhalle, wobei von der Lichtschranke 36 an die Signaleinheit 30 ein Signal ab gegeben wird, so daß die Signaleinheit 30 einem nachfolgend zu reinigenden Zug ein Freigabesignal geben kann.

Soll ein Zug gereinigt werden, dessen Länge die Länge des Waschbereiches 19 übertrifft, so kann der Zug abschnittsweise gereinigt werden, indem jeweils ein zu reinigender Abschnitt in den Waschbereich 19 eingefahren und dieser, wie voranstehend skizziert, gereinigt wird.

Die beiden Wascheinheiten 15 und 17 bilden ein Wascheinheiten-Paar, mit dessen Hilfe der Zug 13 oder ein zu reinigender Abschnitt eines längeren Zuges gereinigt werden können. Um einen längeren Zug besonders schnell zu reinigen, kann auch vorgesehen sein, daß mehrere Wascheinheiten-Paare in gleichmäßigem Abstand hintereinander angeordnet werden und jeweils einen zu reinigenden Abschnitt des Zuges aufnehmen. Dies ermöglicht es, den gesamten Zug gleichzeitig mittels der einzelnen Wascheinheiten-Paare, wie voranstehend skizziert, zu reinigen.

## Patentansprüche

1. Verfahren zum Reinigen eines Fahrzeuges, insbesondere eines Schienenfahrzeuges, mit einer Fahrzeugwaschanlage mit zwei Wascheinheiten, wobei man das Fahrzeug während der Einfahrt in einen Waschbereich der Fahrzeugwaschanlage mittels einer ersten Wascheinheit mit einem Reinigungsmittel einreibt und anschließend unter Zuhilfenahme der zweiten Wascheinheit mechanisch abwäscht, dadurch gekennzeichnet, daß man das mit Reinigungsmittel eingeriebene Fahrzeug im Waschbereich positioniert und anschließend beide Wascheinheiten entlang des stehenden Fahrzeuges bewegt und das Fahrzeug mit beiden Wascheinheiten wäscht.

2. Verfahren nach Anspruch 1, dadurch gekennzeichnet, daß man während der Einfahrt des Fahrzeuges in den Waschbereich die erste Wascheinheit am Anfang und die zweite Wascheinheit am Ende des Waschbereiches positioniert und daß man während des Waschvorganges die beiden Wascheinheiten aufeinander zubewegt.

3. Verfahren nach Anspruch 2, dadurch gekennzeichnet, daß man nach der Einfahrt des Fahrzeuges in den Waschbereich die erste Wascheinheit bei stehendem Fahrzeug zunächst entlang eines Teilbereiches des Fahrzeuges in einer Leerfahrt, ohne das Fahrzeug einzureiben oder zu waschen, in Richtung auf die zweite Wascheinheit bewegt, dann ihre Bewegungsrichtung umkehrt und in einer Waschfahrt den ersten Teilbereich wäscht, und daß man während der Hin- und Herfahrt der ersten Wascheinheit mittels der zweiten Wascheinheit den restlichen Bereich des Fahrzeuges wäscht.

4. Verfahren nach Anspruch 3, dadurch gekennzeichnet, daß die erste Wascheinheit während ihrer Leerfahrt mit höherer Geschwindigkeit bewegt wird als während ihrer anschließenden Waschfahrt.

5. Verfahren nach Anspruch 3 oder 4, dadurch gekennzeichnet, daß die erste Wascheinheit während ihrer Leerfahrt mit etwa doppelt so großer Geschwindigkeit bewegt wird wie während ihrer Waschfahrt.

6. Verfahren nach einem der voranstehenden Ansprüche, dadurch gekennzeichnet, daß die beiden Wascheinheiten nach Beendigung eines ersten Waschvorganges entgegen ihrer ursprünglichen Bewegungsabfolge entlang des zu reinigenden Fahrzeuges bewegt werden und den von ihrer Bewegung jeweils erfaßten Teilbereich ein zweites Mal waschen.

7. Verfahren nach einem der Ansprüche 3 bis 6, dadurch gekennzeichnet, daß die erste Wascheinheit nach Beendigung ihres ersten Waschvorganges in Richtung auf das Ende des Waschbereiches entlang des ersten Teilbereichs des Fahrzeuges bewegt wird und diesen Teilbereich ein zweites Mal wäscht, anschließend ihre Bewegungsrichtung umkehrt und in einer Leerfahrt zurück auf den Anfang des Waschbereiches bewegt wird, und daß während dieser Hin-und Herfahrt der ersten Wascheinheit die zweite Wascheinheit in Richtung auf das Ende des Waschbereiches bewegt wird und hierbei den restlichen Bereich des Fahrzeuges in zweites Mal wäscht.

8. Verfahren nach einem der voranstehenden Ansprüche, dadurch gekennzeichnet, daß man beim Einfahren des Fahrzeuges in den Waschbereich zunächst den Front-bereich des Fahrzeuges in Höhe der ersten Wascheinheit positioniert, dann bei stehendem Fahrzeug die erste Wascheinheit entlang des Frontbereichs bewegt und diesen mit einem Reinigungsmittel einreibt, daraufhin mit dem Fahrzeug weiter in den Waschbereich einfährt und mittels der stehenden ersten Wascheinheit einreibt bis der Frontbereich des Fahrzeuges die zweite Wascheinheit erreicht hat, und daß man anschließend bei stehendem Fahrzeug die erste Wascheinheit entlang des Heckbereichs bewegt und diesen mit Reinigungsmittel einreibt.

9. Verfahren nach einem der voranstehenden Ansprüche, dadurch gekennzeichnet, daß man die beiden Wascheinheiten zu Beginn des Reinigungsvorganges in einem derartigen Abstand zueinander anordnet, daß das gesamte Fahrzeug zwischen den beiden Wascheinheiten positioniert werden kann.

10. Verfahren nach einem der Ansprüche 1 bis 8, dadurch gekennzeichnet, daß man mehrere Wascheinheiten-Paare mit jeweils einer ersten und einer zweiten Wascheinheit in gleichmäßigem Abstand hintereinanderreiht, wobei die Wascheinheiten-Paare jeweils einen zu reinigenden Abschnitt des Fahrzeuges zwischen sich aufnehmen, und daß man die zu reinigenden Abschnitte des Fahrzeuges gleichzeitig mittels jeweils eines Wascheinheiten-Paares reinigt, wobei man beim Einfahren des Fahrzeuges in den Waschbereich dann mit dem Einreiben des Reinigungsmittels mit Hilfe der jeweils ersten Wascheinheiten beginnt, wenn die Front des Fahrzeuges die in Einfahrtrichtung vorderste erste Wascheinheit passiert.

11. Verfahren nach einem der Ansprüche 1 bis 8, dadurch gekennzeichnet, daß man das Fahrzeug abschnittsweise reinigt, indem man jeweils einen zu reinigenden Abschnitt zwischen die beiden im Abstand zueinander angeordneten Wascheinheiten positioniert, diesen Abschnitt reinigt und das Fahrzeug anschließend so weit in Einfahrtrichtung weiterbewegt, bis der Anfang des gereinigten Abschnitts die Höhe der zweiten Wascheinheit erreicht, wobei während dieser Weiterfahrt der nachfolgend zu reinigende Abschnitt mittels der ersten Wascheinheit mit Reinigungsmittel eingerieben wird.

12. Anlage zum Reinigen von Fahrzeugen, insbesondere von Schienenfahrzeugen, mit zwei Wascheinheiten, wobei eine erste Wascheinheit Mittel zum Auftragen und Einreiben eines Reinigungsmittels auf das Fahrzeug und die zweite Wascheinheit Mittel zum mechanischen Waschen des Fahrzeuges umfaßt, dadurch gekennzeichnet, daß die erste Wascheinheit (15) Mittel (21, 22, 23, 24) zum mechanischen Waschen des Fahrzeuges (13) umfaßt und daß die beiden Wascheinheiten (15, 17) mit unterschiedlichen Geschwindigkeiten und unterschiedlichen Bewegungsrichtungen parallel zur Längsachse des zu reinigenden Fahrzeuges (13) verfahrbar sind.

13. Anlage nach Anspruch 12, dadurch gekennzeichnet, daß die erste Wascheinheit (15) unabängig von der zweiten Wascheinheit (17) verfahrbar ist.

14. Anlage nach Anspruch 15 oder 13, dadurch gekennzeichnet, daß die erste Wascheinheit (15) bei einer Leerfahrt, ohne Reinigungsmittel einzureiben oder das Fahrzeug (13) zu waschen, mit höherer Geschwindigkeit verfahrbar ist als während einer Waschfahrt, bei der sie das Fahrzeug (13) wäscht.

15. Anlage nach Anspruch 14, dadurch gekennzeichnet, daß die erste Wascheinheit (15) bei ihrer Leerfahrt mit etwa doppelt so großer Geschwindigkeit verfahrbar ist wie bei ihrer Waschfahrt.
